# EUROPEAN PATENT APPLICATION

(11) **EP 4 675 417 A2**
(43) Date of publication of application: **07.01.2026**
(21) Application number: 25181314.3
(22) Date of filing: 06.06.2025
(51) Int. Cl.: G06F 3/14, G09G 5/00, H04N 19/40, H04N 21/41, H04N 21/4402

(54) **MULTI-DISPLAY SUPPORT FOR MOBILE DEVICES**

(30) Priority: 10.06.2024 US 202418739155
(71) Applicant: Synaptics Incorporated, San Jose, CA 95131 (US)
(72) Inventor: BLOCH, Cezary Boguslaw, San Jose, 95131 (US); CLOUGH, Benjamin, San Jose, 95131 (US)
(74) Representative: J A Kemp LLP

(57) **Abstract**

This disclosure provides methods, devices, and systems for processing content for multiple displays. The present implementations more specifically relate to outputting video content from a mobile computing device to multiple displays coupled to a docking station. In some aspects, a multi-screen controller for a mobile computing device may receive pixel data associated with multiple displays from one or more image sources and may aggregate the received pixel data into multiple frames associated with the multiple displays, respectively. The multi-screen controller transcodes each frame of pixel data, from a first video coding format associated with the one or more image sources to a second video coding format associated with a docking station coupled to the displays, and outputs each frame of transcoded pixel data to the docking station for display on a respective one of the displays.

## Description

### TECHNICAL FIELD

The present implementations relate generally to docking stations, and specifically to multi-display support for mobile devices coupled to docking stations.

### BACKGROUND OF RELATED ART

A universal docking station (or "dock") is an external display interface that can be used to connect a mobile computing device (such as a notebook computer, smartphone, or tablet) to one or more digital displays. As such, a universal dock may include its own frame buffer and video pipeline. Universal docks are often used to connect mobile computing devices to larger displays and/or multiple displays. A host software (HSW) application executing on a mobile computing device may support communications between the mobile computing device and a universal dock. For example, the HSW may detect one or more displays connected to the universal dock and present the displays to an operating system (OS) of the mobile computing device as though they are connected to the mobile computing device itself. As a result, the OS may allocate one or more frame buffers for outputting content (such as images or video) to the displays connected to the universal dock.

However, the OSs for some mobile computing devices (including many smartphones and tablets) do not support outputting content to an external display. For example, very few smartphones currently support video output via a communications interface (such as a universal serial bus (USB) interface). Further, existing smartphones with video output capabilities often do not scale the resolution of the video to match the resolution of the external display. Such smartphones also do not support outputting multiple video streams to multiple external displays. As a result, many existing mobile computing devices provide a poor user experience for productivity and/or multitasking applications.

### SUMMARY

This Summary is provided to introduce in a simplified form a selection of concepts that are further described below in the Detailed Description. This Summary is not intended to identify key features or essential features of the claimed subject matter, nor is it intended to limit the scope of the claimed subject matter.

One innovative aspect of the subject matter of this disclosure can be implemented in a method of processing content for multiple displays by a mobile computing device. The method includes steps of receiving, from one or more image sources, pixel data associated with a plurality of displays; aggregating the received pixel data into a plurality of frames associated with the plurality of displays, respectively; transcoding the plurality of frames of pixel data from a first video coding format associated with the one or more image sources to a second video coding format associated with a docking station coupled to the plurality of displays; and outputting, to the docking station, the plurality of frames of transcoded pixel data for display on the plurality of displays, respectively.

Another innovative aspect of the subject matter of this disclosure can be implemented in a controller for a mobile computing device, including a processing system and a memory. The memory stores instructions that, when executed by the processing system, cause the controller to receive, from one or more image sources, pixel data associated with a plurality of displays; aggregate the received pixel data into a plurality of frames associated with the plurality of displays, respectively; transcode the plurality of frames of pixel data from a first video coding format associated with the one or more image sources to a second video coding format associated with a docking station coupled to the plurality of displays; and output, to the docking station, the plurality of frames of transcoded pixel data for display on the plurality of displays, respectively.

### BRIEF DESCRIPTION OF THE DRAWINGS

The present implementations are illustrated by way of example and are not intended to be limited by the figures of the accompanying drawings.
FIG. 1 shows a block diagram of an example communication system for encoding and decoding data.
FIG. 2 shows a block diagram of an example multi-display system, according to some implementations.
FIG. 3 shows a block diagram of an example multi-screen controller for a mobile computing device, according to some implementations.
FIG. 4 shows another block diagram of an example multi-screen controller, according to some implementations.
FIG. 5 shows an illustrative flowchart depicting an example operation for processing content for multiple displays, according to some implementations.

### DETAILED DESCRIPTION

In the following description, numerous specific details are set forth such as examples of specific components, circuits, and processes to provide a thorough understanding of the present disclosure. The term "coupled" as used herein means connected directly to or connected through one or more intervening components or circuits. The terms "electronic system" and "electronic device" may be used interchangeably to refer to any system capable of electronically processing information. Also, in the following description and for purposes of explanation, specific nomenclature is set forth to provide a thorough understanding of the aspects of the disclosure. However, it will be apparent to one skilled in the art that these specific details may not be required to practice the example embodiments. In other instances, well-known circuits and devices are shown in block diagram form to avoid obscuring the present disclosure. Some portions of the detailed descriptions which follow are presented in terms of procedures, logic blocks, processing and other symbolic representations of operations on data bits within a computer memory.

These descriptions and representations are the means used by those skilled in the data processing arts to most effectively convey the substance of their work to others skilled in the art. In the present disclosure, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signals capable of being stored, transferred, combined, compared, and otherwise manipulated in a computer system. It should be borne in mind, however, that all of these and similar terms are to be associated with the appropriate physical quantities and are merely convenient labels applied to these quantities.

Unless specifically stated otherwise as apparent from the following discussions, it is appreciated that throughout the present application, discussions utilizing the terms such as "accessing," "receiving," "sending," "using," "selecting," "determining," "normalizing," "multiplying," "averaging," "monitoring," "comparing," "applying," "updating," "measuring," "deriving" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

In the figures, a single block may be described as performing a function or functions; however, in actual practice, the function or functions performed by that block may be performed in a single component or across multiple components, and/or may be performed using hardware, using software, or using a combination of hardware and software. To clearly illustrate this interchangeability of hardware and software, various illustrative components, blocks, modules, circuits, and steps have been described below generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure. Also, the example input devices may include components other than those shown, including well-known components such as a processor, memory and the like.

The techniques described herein may be implemented in hardware, software, firmware, or any combination thereof, unless specifically described as being implemented in a specific manner. Any features described as modules or components may also be implemented together in an integrated logic device or separately as discrete but interoperable logic devices. If implemented in software, the techniques may be realized at least in part by a non-transitory processor-readable storage medium including instructions that, when executed, performs one or more of the methods described above. The non-transitory processor-readable data storage medium may form part of a computer program product, which may include packaging materials.

The non-transitory processor-readable storage medium may comprise random access memory (RAM) such as synchronous dynamic random-access memory (SDRAM), read only memory (ROM), non-volatile random access memory (NVRAM), electrically erasable programmable read-only memory (EEPROM), FLASH memory, other known storage media, and the like. The techniques additionally, or alternatively, may be realized at least in part by a processor-readable communication medium that carries or communicates code in the form of instructions or data structures and that can be accessed, read, and/or executed by a computer or other processor.

The various illustrative logical blocks, modules, circuits and instructions described in connection with the embodiments disclosed herein may be executed by one or more processors (or a processing system). The term "processor," as used herein may refer to any general-purpose processor, special-purpose processor, conventional processor, controller, microcontroller, and/or state machine capable of executing scripts or instructions of one or more software programs stored in memory.

As described above, a universal docking station (or "dock") is an external display interface that can be used to connect a mobile computing device to one or more digital displays. For example, a host software (HSW) application executing on a mobile computing device may detect one or more displays connected to a dock and present the displays to an operating system (OS) of the mobile computing device as though they are connected to the mobile computing device itself. However, the OSs for some mobile computing devices do not support outputting content to an external display, much less, multiple displays. Aspects of the present disclosure recognize that a mobile computing device can circumvent any video output limitations of its OS by transcoding video content from a third-party content provider (such as a remote desktop server, a video streaming service, or a gaming service) for output to multiple displays coupled to a dock.

Various aspects relate generally to processing content for multiple displays, and more particularly, to outputting video content from a mobile computing device to multiple displays coupled to a docking station. In some aspects, a multi-screen controller for a mobile computing device may receive pixel data associated with multiple displays from one or more image sources and may aggregate the received pixel data into multiple frames associated with the multiple displays, respectively. For example, the multi-screen controller may store each frame of pixel data in a respective frame buffer. The multi-screen controller transcodes each frame of pixel data, from a first video coding format associated with the one or more image sources to a second video coding format associated with a docking station coupled to the displays, and outputs each frame of transcoded pixel data to the docking station for display on a respective one of the displays. In some implementations, the multi-screen controller may allocate the frame buffers independently of an OS of the mobile computing device.

Particular implementations of the subject matter described in this disclosure can be implemented to realize one or more of the following potential advantages. Aspects of the present disclosure recognize that the ubiquity of smartphones (and other mobile computing devices with similar form factors) has caused such devices to become a de facto security and/or authentication tool for many users (such as for biometric or multi-factor authentication). However, because many existing smartphones cannot output images or video to multiple external displays, smartphones are often unsuitable for use as a productivity or multitasking platform. By using a third-party service (rather than the OS of a mobile computing device) as an image source for pixel data, aspects of the present disclosure may enable a mobile computing device to buffer and output video content for multiple displays. In other words, the mobile computing device operates as an interface or intermediary (similar to a thin client) for transcoding image data between one or more third-party image sources and multiple displays coupled to a docking station. As such, the mobile computing device also may receive and output higher resolution content than would otherwise be supported by its OS.

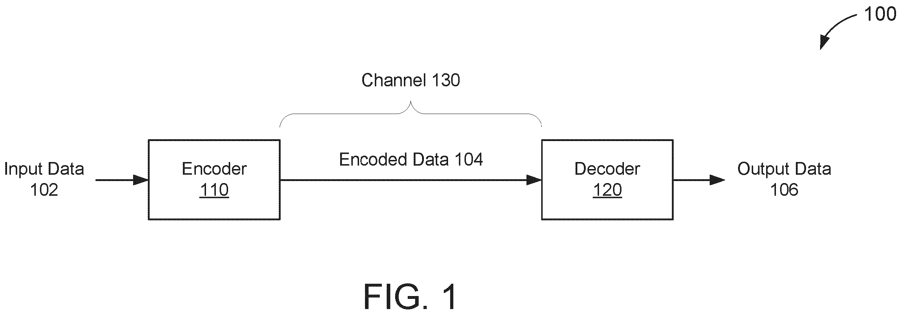

FIG. 1 shows a block diagram of an example communication system 100 for encoding and decoding data. The communication system 100 includes an encoder 110 and a decoder 120. In some implementations, the encoder 110 and decoder 120 may be provided in respective communication devices such as, for example, computing devices (such as smartphones, tablets, servers, or laptops), docking stations, switches, routers, hubs, gateways, cameras, displays, or other devices capable of transmitting or receiving communication signals. In some other implementations, the encoder 110 and decoder 120 may be included in the same device or system.

The encoder 110 receives input data 102 to be transmitted or stored via a channel 130. For example, the channel 130 may include a wired or wireless communication medium that facilities communications between the encoder 110 and the decoder 120. Alternatively, or in addition, the channel 130 may include a data storage medium. In some aspects, the encoder 110 may be configured to compress the size of the input data 102 to accommodate the bandwidth, storage, or other resource limitations associated with the channel 130. For example, the encoder 110 may encode each unit of input data 102 as a respective "codeword" that can be transmitted or stored over the channel 130 (as encoded data 104). The decoder 120 is configured to receive the encoded data 104, via the channel 130, and decode the encoded data 104 as output data 106. For example, the decoder 120 may decompress or otherwise reverse the compression performed by the encoder 110 so that the output data 106 is substantially similar, if not identical, to the original input data 102.

Data compression techniques can be generally categorized as "lossy" or "lossless." Lossy data compression may result in some loss of information between the encoding and decoding steps. As a result, the output data 106 may be different than the input data 102. Example lossy compression techniques include, among other examples, transform coding (such as through application of a spatial-frequency transform) and quantization (such as through application of a quantization matrix). In contrast, lossless data compression does not result in any loss of information between the encoding and decoding steps as long as the channel 130 does not introduce errors into the encoded data 104. As a result, the output data 106 is identical to the input data 102. Example lossless compression techniques include, among other examples, entropy encoding (such as arithmetic coding, Huffman coding, or Golomb coding) and run-length encoding (RLE).

A video "codec" is a particular type of encoder and/or decoder that compresses or decompresses images or video according to a video coding format. Example video coding formats include Advanced Video Coding (AVC), High Efficiency Video Coding (HEVC), and various other Motion Picture Experts Group (MPEG) standards, among other examples. A digital image (or frame of video) can be represented by an array of pixel values (or multiple arrays of pixel values associated with different color channels). The encoder 110 may use a video codec to encode the pixel values, according to a known video coding format, for transmission over the channel 130. The decoder 120 may use the same video codec to decode the encoded pixel values received over the channel 130. Video codecs often implement lossy compression techniques, which results in some loss of information between the pixel data encoded by the encoder 110 and the corresponding pixel data recovered by the decoder 120.

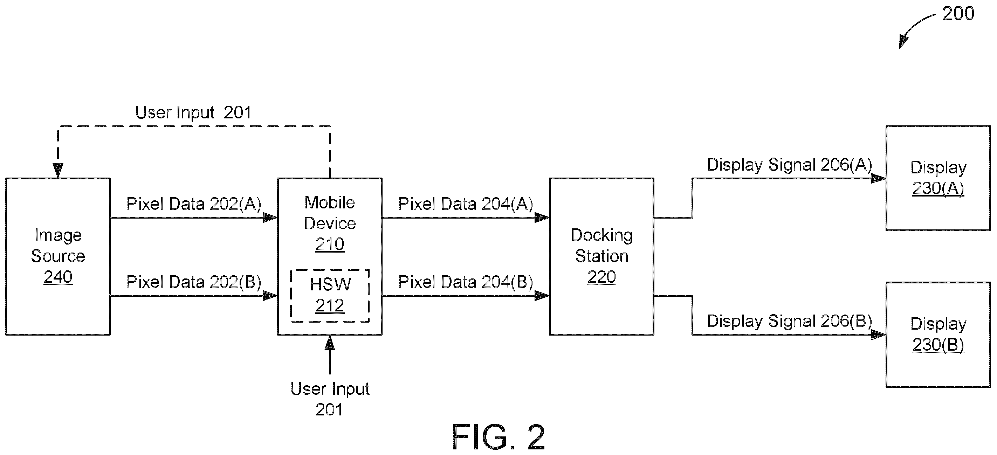

FIG. 2 shows a block diagram of an example multi-display system 200, according to some implementations. The system 200 includes a mobile computing device 210 (also referred to as a "mobile device") and a docking station 220 coupled to multiple displays 230(A) and 230(B). Although two displays 230(A) and 230(B) are shown in FIG. 2, the docking station 220 may be coupled to any number (N) of displays in actual implementations. In some aspects, the docking station 220 may be communicatively coupled to the mobile device 210 via a first communication channel and may be coupled to each of the displays 230(A) and 230(B) via a second communication channel having a greater bandwidth than the first communication channel.

In some implementations, the first communication channel may be a wired medium. For example, the first communication channel may conform to a Universal Serial Bus (USB) standard or an Ethernet standard (such as the Institute of Electrical and Electronics Engineers (IEEE) 802.3 family of standards), among other examples. In some other implementations, the first communication channel may be a wireless medium. For example, the first communication channel may conform to a wireless local area network (WLAN) standard (including the IEEE 802.11 family of standards) or a Bluetooth^{®} standard (such as defined by the Bluetooth Special Interest Group (SIG)), among other examples. In some implementations, the second communication channel may conform to a high-definition multimedia interface (HDMI) standard, a DisplayPort (DP) standard, or various other computer display standards.

The mobile device 210 is configured to output pixel data 204(A) and 204(B) representing images or video for display on the displays 230(A) and 230(B), respectively. The docking station 220 converts the pixel data 204(A) and 204(B) to display signals 206(A) and 206(B), respectively, that can be interpreted by the displays 230(A) and 230(B). For example, the display signals 206(A) and 206(B) may include data signals, clock signals, and various other synchronization or control signals that can be used to render the pixel data 204(A) and 204(B) on the displays 230(A) and 230(B). Each of the displays 230(A) and 230(B) may be any digital display device capable of rendering or displaying digital images based on the display signals 206(A) and 206(B). Example suitable display technologies include light emitting diode (LED), organic LED (OLED), cathode ray tube (CRT), liquid crystal display (LCD), and plasma, among other examples.

As described with reference to FIG. 1, pixel data is often encoded or compressed for transmission over a communication channel. Thus, in some implementations, the mobile device 210 and the docking station 220 may be examples of the encoder 110 and the decoder 120, respectively, of FIG. 1. More specifically, the mobile device 210 may encode the pixel data 204(A) and 204(B), using a video codec, for transmission to the docking station 220. The docking station 220 may decode the pixel data 204(A) and 204(B), using the same video codec, to recover the images or video encoded therein. In some implementations, the mobile device 210 may include host software (HSW) 212 configured to interface or communicate with the docking station 220. For example, the HSW 212 may encode the pixel data 204(A) and 204(B) according to a video coding format known to be supported by the docking station 220. An example suitable video coding format includes the DL3 codec promulgated by DisplayLink^{®}.

In some aspects, the HSW 212 may further detect the displays 230(A) and 230(B) coupled to the docking station 220 and present the displays 230(A) and 230(B) to an OS of the mobile device 210 as though they are connected to the mobile device itself. In some implementations, the OS may allocate a respective frame buffer for each of the displays 230(A) and 230(B) detected by the HSW 212 (such as to buffer or store the pixel data 204(A) and 204(B)). However, some operating systems (including OSs for many existing smartphones and tablets) may not support video output to multiple external displays. For example, some operating systems may (at most) mirror, onto a single external display, the content that would otherwise be displayed on a mobile device's integrated display. Although such operating systems may allocate one or more frame buffers for the content to be mirrored, each of the frame buffers can only output video to a single external display. Aspects of the present disclosure recognize that a mobile device can bypass or circumvent any video output limitations of its OS by using a third-party content provider (rather than the OS) as the pixel source for the HSW 212.

In some aspects, the mobile device 210 may retrieve pixel data 202(A) and 202(B) from an external image source 240 (also referred to as a "third-party" image source) for display on the displays 230(A) and 230(B). Example suitable third-party image sources include remote desktop servers, video streaming services, and gaming services, among other examples. In some implementations, the mobile device 210 may receive the pixel data 202(A) and 202(B) from multiple image sources. For example, the pixel data 202(A) may be provided by a remote desktop server and the pixel data 202(B) may be provided by a video streaming service. The mobile device 210 further transcodes the pixel data 202(A) and 202(B), from a video coding format associated with the image source 240 to the video coding format associated with the docking station 220, as the pixel data 204(A) and 204(B), respectively. As a result, the third-party image source 240 (rather than the OS of the mobile device 210) provides the pixel sources for the displays 230(A) and 230(B), and the mobile device 210 operates as an interface or intermediary (similar to a thin client) between the image source 240 and the docking station 220.

In some aspects, the mobile device 210 may communicate with the third-party image source 240 via a wireless communication medium. For example, the wireless communication medium may conform to a WLAN standard or a Bluetooth^{®} standard, among other examples. The mobile device 210 also may include any software and/or hardware needed to interface with the third-party image source 240 (such as communication protocols, content delivery protocols, and any proprietary protocols associated with the image source 240). For example, if the third-party image source 240 is a remote desktop server, the mobile device 210 may include software implementing one or more protocols associated with the remote desktop server (such as a remote desktop protocol (RDP)). Such protocols may be used by the mobile device 210 to receive the pixel data 202(A) and 202(B) from, and transmit user inputs 201 to, the remote desktop server.

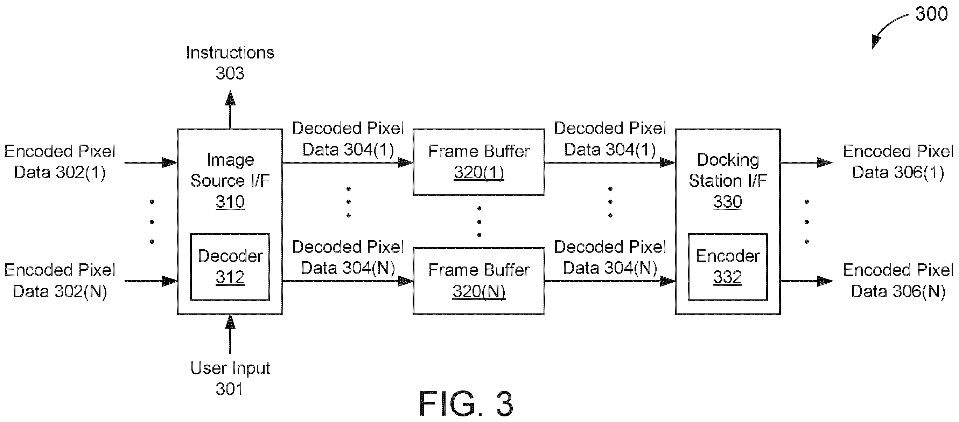

FIG. 3 shows a block diagram of an example multi-screen controller 300 for a mobile computing device, according to some implementations. In some implementations, the mobile computing device may be one example of the mobile device 210 of FIG. 2. More specifically, the multi-screen controller 300 is configured to operate as an interface or intermediary between a docking station (such as the docking station 220 of FIG. 2) and one or more third-party image sources (such as the third-party image source 240).

The multi-screen controller 300 includes an image source interface (I/F) 310, N frame buffers 320(1)-320(N), and a docking station interface (I/F) 330. The image source interface 310 is configured to receive a number (N) of streams of encoded pixel data 302(1)-302(N) from the one or more third-party image sources. In some implementations, the image source interface 310 also may transmit instructions 303 to one or more of the third-party image sources. Thus, the image source interface 310 may include any software and/or hardware needed to communicate or interface with each of the third-party image sources (such as communication protocols, content delivery protocols, and any proprietary protocols associated with each image source).

In some implementations, the image source interface 310 may decode the N streams of encoded pixel data 302(1)-302(N) as N streams of decoded pixel data 304(1)-304(N), respectively, based on one or more video coding formats associated with the third-party image sources. For example, the image source interface 310 may include a decoder 312 that decodes each stream of encoded pixel data 302(1)-302(N) according to a respective video coding format associated with the third-party image source from which the encoded pixel data is received. In some implementations, the decoder 312 may decode one or more of the streams of encoded pixel data 302(1)-302(N) using an x264 codec. In some implementations, the image source interface 310 may include multiple decoders each associated with a different video coding format.

In some implementations, the resolution of the decoded pixel data 304(1)-304(N) may be associated with a pixel resolution of an external display coupled to the docking station. For example, if an external display has a 1920 x 1080 pixel resolution, the image source interface 310 may produce a frame of decoded pixel data (representing an image or video frame) having a resolution of up to 1920 x 1080 for display on the external display. In some aspects, the image source interface 310 may scale the resolution of the decoded pixel data 304(1)-304(N) to match the pixel resolution of the external display (such as by upscaling or downscaling the pixel data received from a third-party image source). In some other aspects, the image source interface 310 may retrieve pixel data having a desired resolution from a third-party image source, for example, by indicating the pixel resolution of the external display (or other desired resolution) to the third-party image source via the instructions 303.

The frame buffers 320(1)-320(N) are configured to store the decoded pixel data 304(1)-304(N), respectively. More specifically, each of the frame buffers 320(1)-320(N) is configured to store a frame of decoded pixel data for a respective external display. Thus, in some aspects, the frame buffers 320(1)-320(N) may be allocated based at least in part on a number of external displays coupled to the docking station (such as detected by the HSW 212 of FIG. 2). In some implementations, one or more of the frame buffers 320(1)-320(N) may be allocated by an OS of the mobile computing device. In some other implementations, the multi-screen controller 300 may allocate one or more of the frame buffers 320(1)-320(N) independently of the OS. This allows the mobile device to output multiple streams of pixel data for multiple displays even if its OS does not support video output to multiple external displays.

The docking station interface 330 is configured to encode the decoded pixel data 304(1)-304(N) stored in the frame buffers 320(1)-320(N) as N streams of encoded pixel data 306(1)-306(N), respectively. The docking station interface 330 is further configured to transmit the N streams of encoded pixel data 306(1)-306(N) to the docking station, where each of the N streams of encoded pixel data 306(1)-306(N) represents images or video for display on a respective external display coupled to the docking station. Thus, the docking station interface 330 may include any software and/or hardware needed to communicate or interface with the docking station (such as communication protocols, content delivery protocols, and any proprietary protocols associated with the docking station).

In some implementations, the docking station interface 330 may encode the decoded pixel data 304(1)-304(N) as the N streams of encoded pixel data 306(1)-306(N), respectively, based on one or more video coding formats associated with the docking station. For example, the docking station interface 310 may include an encoder 332 that encodes each stream of decoded pixel data 304(1)-304(N) according to one or more video coding formats supported by the docking station (such as the DL3 codec). In some implementations, the docking station interface 330 may include multiple encoders each associated with a different video coding format.

In some aspects, the image source interface 310 may retrieve and/or update one or more of the streams of encoded pixel data 302(1)-302(N) based on user input 301 received via one or more user interfaces associated with the multi-screen controller 300 (not shown for simplicity). For example, the user inputs 301 may represent user interactions associated with a graphical user interface (GUI) and/or content displayed on an integrated display of the mobile device or on one or more of the external displays coupled to the docking station. In some implementations, the user input 301 may be received via one or more input features (such as touchscreens, buttons, or switches) of the mobile computing device. In some other implementations, the user input 301 may be received via one or more input devices (such as keyboards, mice, or joysticks) coupled to the docking station.

In some implementations, the image source interface 310 may transmit one or more user inputs 301, as instructions 303, to one or more of the third-party image sources. For example, some user inputs 301 may represent keystrokes or keyboard inputs associated with a software application (such as a word processing application) hosted by a remote desktop server. In this example, the image source interface 310 may forward the keyboard inputs to the remote desktop server so that the keystrokes can be registered by the software application and presented on an external display via one or more of the streams of pixel data 302(1)-302(N).

In another example, the GUI (displayed on the mobile device and/or an external display) may enable a user to input login credentials for a third-party image source. In this example, the user inputs 301 may include authentication data (such as biometric data, passwords, personal identification number (PIN) codes, security access codes, or other login credentials) associated with the third-party image source. The image source interface 310 may forward the authentication inputs to the third-party image source to enable access to the content hosted by the image source.

In some other implementations, the image source interface 310 may process one or more user inputs 301 locally. For example, some user inputs 301 may include authentication data (such as biometric data, passwords, **PIN** codes, security access codes, or other login credentials) for authenticating a user to access the multi-screen controller 300 itself. In this example, the image source interface 310 may authenticate the user locally and provide access to the content hosted by the third-party image sources only if the user is an authorized user of the mobile computing devices.

In another example, the GUI (displayed on the mobile device and/or an external display) may enable a user to select the external display(s) to be used for displaying content from a third-party image source. In this example, the user inputs 301 may indicate a number and/or selection of external displays to be used by the multi-screen controller 300. The user inputs 301 also may specify which external display is to receive pixel data from a given third-party image source. The image source interface 310 may store each of the N streams of decoded pixel data 304(1)-303(N) in a respective one of the frame buffers 320(1)-320(N) based on the user selection.

Still further, in some implementations, a third-party image source (such as a game streaming service) may render content directly to one or more of the frame buffers 320(1)-320(N) allocated by the multi-screen controller 300, thereby bypassing the frame buffers of the OS. This allows the content to be directly displayed on one or more external displays (without first being rendered on the mobile device). In such implementations, the mobile device may serve as a proxy for the third-party image source. For example, where the third-party image source is a game streaming service or platform, the mobile device may operate as a portable gaming console or device.

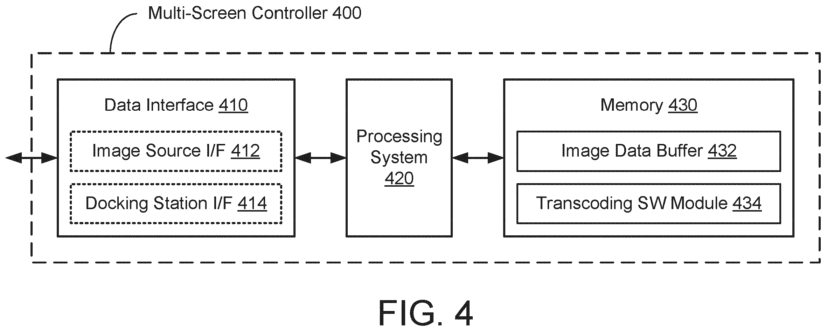

FIG. 4 shows another block diagram of an example multi-screen controller 400, according to some implementations. In some implementations, the multi-screen controller 400 may be one example of the multi-screen controller 300 of FIG. 3. More specifically, the multi-screen controller 400 is configured to operate as an interface or intermediary between a docking station (such as the docking station 220 of FIG. 2) and one or more third-party image sources (such as the third-party image source 240).

The multi-screen controller 400 includes a data interface 410, a processing system 420, and a memory 430. The data interface 410 is configured to receive encoded pixel data from the one or more third-party image sources and output encoded pixel data to the docking station. In some aspects, the data interface 410 may include an image source interface (I/F) 412 to communicate with the one or more third-party image sources and a docking station interface (I/F) 414 to communicate with the docking station. In some implementations, the image source interface may receive, from the one or more image sources, pixel data associated with a plurality of displays coupled to the docking station.

The memory 430 may include an image data buffer 432 that is configured to aggregate the received pixel data into a plurality of frames associated with a plurality of displays, respectively. The memory 430 also may include a non-transitory computer-readable medium (including one or more nonvolatile memory elements, such as EPROM, EEPROM, Flash memory, a hard drive, and the like) that may store a transcoding software (SW) module 434 to transcode the plurality of frames of pixel data from a first video coding format associated with the one or more image sources to a second video coding format associated with the docking station. In some implementations, the docking station interface 414 may further output, to the docking station, the plurality of frames of transcoded pixel data for display on the plurality of displays, respectively.

The processing system 420 may include any suitable one or more processors capable of executing scripts or instructions of one or more software programs stored in the multi-screen controller 400 (such as in memory 430). The transcoding SW module 434 may include instructions that, when executed by the processing system 420, causes the multi-screen controller 400 to perform the corresponding functions. For example, the processing system 420 may execute the transcoding SW module 434 to transcode the plurality of frames of pixel data from the first video coding format associated with the one or more image sources to the second video coding format associated with the docking station.

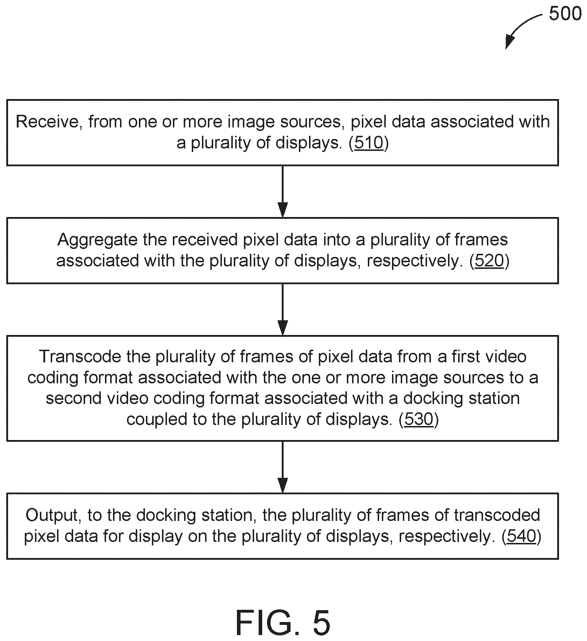

FIG. 5 shows an illustrative flowchart depicting an example operation 500 for processing content for multiple displays, according to some implementations. In some implementations, the example operation 500 may be performed by a controller for a mobile computing device such as any of the multi-screen controllers 300 or 400 of FIGS. 3 and 4, respectively.

The controller may receive, from one or more image sources, pixel data associated with a plurality of displays (510). The controller may aggregate the received pixel data into a plurality of frames associated with the plurality of displays, respectively (520). The controller may transcode the plurality of frames of pixel data from a first video coding format associated with the one or more image sources to a second video coding format associated with a docking station coupled to the plurality of displays (530). In some implementations, the first video coding format may be associated with an x264 video codec. The controller may further output, to the docking station, the plurality of frames of transcoded pixel data for display on the plurality of displays, respectively (540).

In some aspects, the aggregating of the received pixel data may include storing the plurality of frames of pixel data in a plurality of frame buffers, respectively. In some implementations, each of the plurality of frame buffers may be separate from an operating system of the mobile computing device.

In some aspects, the transcoding of the plurality of frames of pixel data may include adjusting a resolution of the received pixel data based at least in part on a resolution of each display of the plurality of displays.

In some aspects, the controller may further receive authentication data associated with a user of the mobile computing device and authenticate the user based on the authentication data, where the pixel data is received from the one or more image sources based at least in part on authenticating the user. In some implementations, the authentication data may include biometric data, a password, or a security access code.

In some aspects, the controller may further receive one or more user inputs via one or more input devices coupled to the docking station and update the plurality of frames of transcoded pixel data based at least in part on the one or more user inputs. In some implementations, the updating of the plurality of frames of transcoded pixel data may include transmitting the one or more user inputs to the one or more image sources and receiving updated pixel data from the one or more image sources responsive to the one or more user inputs.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the disclosure.

The methods, sequences or algorithms described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

In the foregoing specification, embodiments have been described with reference to specific examples thereof. It will, however, be evident that various modifications and changes may be made thereto without departing from the broader scope of the disclosure as set forth in the appended claims. The specification and drawings are, accordingly, to be regarded in an illustrative sense rather than a restrictive sense.

## Claims

1. A method of processing content for multiple displays by a mobile computing device, comprising:
receiving, from one or more image sources, pixel data associated with a plurality of displays;
aggregating the received pixel data into a plurality of frames associated with the plurality of displays, respectively;
transcoding the plurality of frames of pixel data from a first video coding format associated with the one or more image sources to a second video coding format associated with a docking station coupled to the plurality of displays; and
outputting, to the docking station, the plurality of frames of transcoded pixel data for display on the plurality of displays, respectively.

2. The method of claim 1, wherein the first video coding format is associated with an x264 video codec.

3. The method of claim 1, wherein the aggregating of the received pixel data comprises:
storing the plurality of frames of pixel data in a plurality of frame buffers, respectively.

4. The method of claim 3, wherein each of the plurality of frame buffers is separate from an operating system of the mobile computing device.

5. The method of claim 1, wherein the transcoding of the plurality of frames of pixel data comprises:
adjusting a resolution of the received pixel data based at least in part on a resolution of each display of the plurality of displays.

6. The method of claim 1, further comprising:
receiving authentication data associated with a user of the mobile computing device; and
authenticating the user based on the authentication data, the pixel data being received from the one or more image sources based at least in part on authenticating the user.

7. The method of claim 6, wherein the authentication data includes biometric data, a password, or a security access code.

8. The method of claim 1, further comprising:
receiving one or more user inputs via one or more input devices coupled to the docking station; and
updating the plurality of frames of transcoded pixel data based at least in part on the one or more user inputs.

9. The method of claim 8, wherein the updating of the plurality of frames of transcoded pixel data comprises:
transmitting the one or more user inputs to the one or more image sources; and
receiving updated pixel data from the one or more image sources responsive to the one or more user inputs.

10. A controller for a mobile computing device, comprising:
a processing system; and
a memory storing instructions that, when executed by the processing system, causes the controller to:
receive, from one or more image sources, pixel data associated with a plurality of displays;
aggregate the received pixel data into a plurality of frames associated with the plurality of displays, respectively;
transcode the plurality of frames of pixel data from a first video coding format associated with the one or more image sources to a second video coding format associated with a docking station coupled to the plurality of displays; and
output, to the docking station, the plurality of frames of transcoded pixel data for display on the plurality of displays, respectively.

11. The controller of claim 10, wherein the first video coding format is associated with an x264 video codec; or
wherein the mobile device comprises a smartphone; or
wherein the one or more image sources include a remote desktop server.

12. The controller of claim 10, wherein the aggregating of the received pixel data comprises:
storing the plurality of frames of pixel data in a plurality of frame buffers, respectively;
wherein, optionally, each of the plurality of frame buffers is separate from an operating system of the mobile computing device.

13. The controller of claim 10, wherein the transcoding of the plurality of frames of pixel data comprises:
adjusting a resolution of the received pixel data based at least in part on a resolution of each display of the plurality of displays.

14. The controller of claim 10, wherein execution of the instructions further causes the controller to:
receive authentication data associated with a user of the mobile computing device; and
authenticate the user based on the authentication data, the pixel data being received from the one or more image sources based at least in part on authenticating the user;
wherein, optionally, the authentication data includes biometric data, a password, or a security access code.

15. The controller of claim 10, wherein execution of the instructions further causes the controller to:
receive one or more user inputs via one or more input devices coupled to the docking station; and
update the plurality of frames of transcoded pixel data based at least in part on the one or more user inputs;
wherein, optionally, the updating of the plurality of frames of transcoded pixel data comprises transmitting the one or more user inputs to the one or more image sources, and receiving updated pixel data from the one or more image sources responsive to the one or more user inputs.
